# FASCICULE DE BREVET EUROPEEN

(11) **EP 0 836 387 B1**
(45) Date de publication et mention de la délivrance du brevet: **12.04.2006**
(21) Numéro de dépôt: 96924022.5
(22) Date de dépôt: 26.06.1996
(51) Int. Cl.: A01N 47/02, A01N 43/56, A01N 25/00

(54) **PROCEDE DE CONTROLE D'UNE POPULATION D'INSECTES SOCIAUX AVEC DES 1-ARYLPYRAZOLES OU 1-HETEROARYLPYRAZOLES**
VERFAHREN ZUR BEKÄMPFUNG SOZIALER INSEKTEN MIT 1-ARYLPYRAZOLEN ODER 1-HETEROARYLPYRAZOLEN
METHOD FOR CONTROLLING A POPULATION OF SOCIAL INSECTS USING 1-ARYLPYRAZOLES OR 1-HETEROARYLPYRAZOLES

(30) Priorité: 29.06.1995 FR 9508074; 29.01.1996 FR 9601238
(43) Date de publication de la demande: 22.04.1998
(73) Titulaire: BASF Agro B.V., Arnhem (NL), Wädenswil-Branch, 8820 Wädenswil/Au (CH)
(72) Inventeur: ZANGIACOMI, Louis, F-69570 Dardilly (FR)
(74) Mandataire: Niedenbrück, Matthias
(86) Numéro de dépôt international: PCT/FR1996/000994
(87) Numéro de publication internationale: WO 1997/001279

(56) Documents cités:
- EP-A- 0 084 310
- EP-A- 0 295 117
- EP-A- 0 500 209
- WO-A-87/03781
- WO-A-93/06089
- WO-A-94/21606
- WO-A-96/16543
- WO-A-96/16544
- WO-A-96/32014
- WO-A-97/11602
- FR-A- 2 713 889
- FR-A- 2 713 891
- CHEMICAL ABSTRACTS, vol. 123, no. 21, 20 Novembre 1995 Columbus, Ohio, US; abstract no. 278677, F.A.M.MARICONI: "Field tests for control of the mound-building termite cornitermes cumulans (Kollar, 1832) (Isoptera, Termitidae)" XP002014587 & SCI. AGRIC., vol. 51, no. 3, 1994, pages 505-508,
- DATABASE WPI Week 8627 Derwent Publications Ltd., London, GB; AN 86-173308 [27] XP002014589 & JP,A,61 106 505 (EARTH SEIYAKU) , 24 Mai 1986
- PROC. BELTWIDE COTTON CONFERENCES, vol. 2, 1996, pages 759-765, XP000602846 N.HAMON ET AL.: "WORLDWIDE DEVELOPMENT OF FIPRONIL INSECTICIDE"
- DATABASE CROPU STN-International STN-accession no. 96-81812, J.R.BLOOMQUIST: "Ion channels as targest for insecticides" XP002014588 & ANNU.REV.ENTOMOL., vol. 41, 1996, pages 163-190,

## Description

La présente invention a pour objet un procédé de contrôle d'une population de fourmis ou de guêpes.

Il est souvent très désirable de lutter contre les inconvénients provoqués par les populations de fourmis ou de guêpes, spécialement dans le cas des populations de fourmis. Les fourmis et les guêpes sont des insectes sociaux, c'est-à-dire des insectes vivant en grande société, ou en colonie comprenant un grand nombre de tels insectes ou congénères.

Dans le cas par exemple des fourmis, ces inconvénients découlent généralement du désagrément qu'entraîne pour les personnes la présence ou le passage de colonnes de fourmis dans les locaux d'habitation ou dans leur voisinage immédiat, tel que terrasse ou jardin d'agrément. Le passage de telles colonnes de fourmis sur la pelouse voisinant une maison individuelle peut être notamment particulièrement désagréable pour l'occupant des lieux qui souhaite se reposer en s'étendant sur ladite pelouse, en raison des morsures qu'infligent certaines espèces.

La lutte contre les fourmis est également souhaitable en ce qui conceme la culture des arbres fruitiers et/ ou d'omement. En effet certaines espèces de fourmis assurent un rôle de défense des pucerons contre leurs prédateurs et contribuent ainsi au maintien de populations importantes de pucerons, préjudiciables à la bonne santé des arbres concernés et/ou aux rendements en fruits.

Certaines espèces de fourmis occasionnent parfois des désagréments encore plus importants. Ainsi la fourmi pharaon (*Monomorium pharaonis*) peut créer des fourmilières à l'intérieur même des locaux d'habitation, ce qui, dans le cas d'immeubles et notamment d'hôpitaux, pose des problèmes d'hygiène.

Or les désagréments et/ou les dégâts causés par les fourmis ou les guêpes, et de préférence les fourmis, sont en proportion directe avec le nombre parfois très important que peut atteindre une population de tels insectes, par exemple, dans le cas des fourmis, le nombre très important d'individus dans la population d'une fourmilière.

On connaît des procédés de lutte contre les fourmis ou les guêpes mettant en oeuvre des composés insecticides. Cependant ces procédés ne sont pas toujours satisfaisants.

En effet, ils ne détruisent souvent qu'une petite partie de la population concernée, par exemple dans le cas des fourmis, une fraction des ouvrières chargées d'aller récolter la nourriture à l'extérieur de la fourmilière. La destruction de cette catégorie de population ne suffit pas cependant à remédier aux inconvénients occasionnés par les fourmis. En effet la capacité importante de prolifération des fourmis et leur spécialisation en fonction des besoins de la fourmilière sont capables de compenser rapidement cette destruction, en entraînant une nouvelle augmentation de la population.

Les procédés connus présentent par ailleurs l'inconvénient qu'il est très difficile de traiter tous les individus de la population, notamment en raison du fait que, en ce qui concerne les fourmis, les fourmilières sont peu accessibles, car généralement situées à une profondeur de plusieurs dizaines de centimètres sous la surface du sol.

Un but de la présente invention est de remédier à ces inconvénients.

Un autre but de la présente invention est d'assurer la destruction des larves présentes dans la fourmilière, ou d'une manière plus générale dans le nid ou le lieu d'habitation des dits insectes sociaux.

Un autre but de la présente invention est d'assurer la destruction des femelles pondeuses présentes dans la fourmilière, ou d'une manière plus générale dans le nid ou le lieu d'habitation des dits insectes sociaux.

Un autre but de la présente invention est de proposer un procédé permettant la destruction définitive de la totalité ou la quasi-totalité d'une population de fourmis ou de guêpes, de préférence de fourmis.

Il a maintenant été trouvé que ces buts pouvaient être atteints en totalité ou en partie au moyen du procédé de contrôle selon l'invention qui est décrit en détail ci-après.

La présente invention a donc pour objet un procédé de contrôle d'une population de fourmis ou de guêpes, caractérisé en ce que l'on applique à une fraction mineure de cette population une quantité efficace d'une composition comprenant un appât et un composé de 5-amino-3-cyano-1-[2,6-dichloro-4-(trifluoromethyl)phenyl]-4-[(trifluoromethyl)sulfinyl]-1*H*-pyrazole et caractérisé en ce que la quantité efficace de composition mise en oeuvre est égale à la dose nécessaire à la destruction d'au moins 90 % de la fraction mineure de la population d'insectes sociaux à laquelle est appliquée ladite composition, en un temps compris entre 2 et 30 jours, et la composition est appliquée à une fraction de la population comprise entre 1 et 40 % de la population totale.

Les populations de fourmis sont plus spécialement préférées parmi les populations de fourmis ou de guêpes que l'on peut contrôler au moyen du procédé selon l'invention.

Par contrôle d'une population de fourmis ou de guêpes, on entend, au sens de la présente invention, la lutte contre les dits insectes, et plus particulièrement la destruction totale ou quasi totale de ladite population, autrement dit la destruction de plus de 60 %, de préférence de plus de 70 %, et plus préférentiellement encore de 95 à 100 % de ladite population.

De manière préférée, la quantité efficace de composition mise en oeuvre est égale à la dose nécessaire à la destruction d'au moins 90 % de la fraction mineure de la population d'insectes sociaux à laquelle est appliquée ladite composition, en un temps compris entre 2 et 7 jours. La fraction mineure correspond souvent et pratiquement à la population vivant ou circulant hors du nid ou du lieu d'habitation en commun.

Selon une variante davantage préférée de l'invention, lorsque la population est une population de fourmis, la quantité efficace de composition mise en oeuvre pour le procédé selon l'invention est généralement telle que la dose de composé de 5-amino-3-cyano-1-[2,6-dichloro-4-(trifluoromethyl)phenyl]-4-[(trifluoromethyl)sulfinyl]-1*H*-pyrazole est comprise entre 0,05 et 50 mg par fourmilière traitée, de préférence de 0,1 à 20 mg. Cette quantité efficace peut être déterminée de façon plus précise dans ces intervalles par des essais systématiques, en fonction des espèces de fourmis dont on souhaite contrôler la population, et également en fonction de l'importance et de l'étendue des fourmilières qui peuvent varier selon la nature de ces espèces.

L'invention porte donc aussi sur un procédé de lutte contre les fourmis ou les guêpes, ayant un nid ou lieu d'habitation en commun où ils vivent avec une population substantielle de leurs congénères, le dit procédé comprenant un traitement par une dose efficace, de préférence une dose comprise entre 0,0001 et 20 grammes par 100 m² d'une ou plusieurs zones fréquentées ou supposées fréquentées par les dites fourmis ou guêpes, la dite zone étant située hors du dit lieu de la dite habitation en commun mais étant un lieu où les fourmis ou guêpes circulent ou sont supposées circuler.

Les fourmis que l'on peut contrôler au moyen du procédé selon l'invention sont notamment :
- les fourmis du genre *Lasius,* par exemple la fourmi noire (*Lasius niger*);
- la fourmi des trottoirs (*Tetramorium caespitum*) *;*
- la fourmi pharaon (*Monomorium pharaonis*) *;*
- la fourmi d'Argentine (*Iridomyrmex humilis*) *;*
- les fourmis de feu appartenant au genre *Solenopsis ;*
- les fourmis champignonistes, telle que les fourmis du genre *Acromyrmex* (par exemple la fourmi manioc) et les fourmis du genre *Atta.*

Le composé de 5-amino-3-cyano-1-[2,6-dichloro-4-(trifluoromethyl)phenyl]-4-[(trifluoromethyl)sulfinyl]-1*H*-pyrazole peut être préparé selon un des procédés décrits dans les demandes de brevet WO 87/3781, 93/6089, 94/21606, EP 295117 ou encore par un autre procédé compris dans les connaissances générales de l'homme du métier compétent en synthèse chimique. Ce composé est également désigné dans la suite du présent texte par le terme de matière active.

L'appât mis en oeuvre dans la composition utilisée dans le procédé selon l'invention est un produit suffisamment appétant pour inciter les fourmis ou les guêpes à l'ingérer. Dans le cas des fourmis, cet appât est choisi par exemple, mais de façon non exclusive, parmi des protéines animales et/ou végétales, ou bien des matières grasses également animales et/ou végétales ou encore parmi les mono, oligo ou polyorganosaccharides, spécialement parmi le saccharose, le lactose, le fructose, le dextrose, le glucose ou encore la mélasse ou le miel.

De préférence, la fraction mineure de la population à laquelle est appliquée la composition mise en oeuvre dans le procédé selon l'invention est comprise entre 2 et 20 % de la population totale.

Selon une variante préférée de l'invention, la population de fourmis que l'on peut contrôler au moyen du procédé selon l'invention est une population de fourmis vivant dans une même fourmilière. Dans ce cas, la fraction mineure de la population à laquelle la composition est appliquée est généralement constituée par des ouvrières chargées d'aller collecter la nourriture à l'extérieur de la fourmilière, dites ouvrières récolteuses de la fourmilière.

La dose de composé de 5-amino-3-cyano-1-[2,6-dichloro-4-(trifluoromethyl)phenyl]-4-[(trifluoromethyl)sulfinyl]-1*H* pyrazole dans la composition utilisée est comprise entre 0,0005 et 0,5 %, de préférence entre 0,001 et 0,2 %. Dans le présent texte les pourcentages correspondant à des doses sont sauf indication contraire des pourcentages poids/poids.

La dose d'appât dans la composition utilisée est généralement comprise entre 1 et 99 %, de préférence entre 30 et 99 %. La composition utilisée peut comprendre également d'autres additifs tels qu'un solvant de la matière active, un arôme, un agent de conservation, un colorant ou un amertumant.

Selon une variante particulièrement avantageuse du procédé selon l'invention, on préfère appliquer la composition en plaçant celle-ci dans une boîte porte appât close et comportant des ouvertures, réservées en raison de leur taille, à l'usage exclusif des fourmis, ou d'insectes de taille similaire, dans une zone où sont susceptibles de se trouver ces insectes. La zone peut notamment se trouver dans un local public ou privé, tel qu'un local d'habitation, ou encore sur un balcon, une terrasse, ou dans un jardin ou dans un champ. Cette variante présente une sécurité améliorée, s'agissant d'une matière active susceptible de présenter un risque en cas de contact ou d'ingestion accidentelle par des animaux domestiques ou des enfants.

Dans les exemples qui suivent le composé de 5-amino-3-cyano-1-[2,6-dichloro-4-(trifluoromethyl)phenyl]-4-((trifluoromethyl)sulfinyl]-1*H-*pyrazole est appelé composé A.

### Exemple 1 :

On dispose à 20 cm de l'entrée d'une fourmilière en activité un verre de montre contenant 10g d'une dispersion de 0,05 % de composé A dans du miel. Les fourmis sont de l'espèce Lasius niger pour laquelle la fraction des ouvrières en charge de récolter la nourriture est voisine de 10 % de la population totale. La population totale est estimée par un comptage effectué sur une fourmilière non traitée, dite témoin, à 10 000 individus.

Durant les 2 premiers jours, on observe que des fourmis se dirigent en colonne depuis la fourmilière jusqu'au verre de montre, s'arrêtent pour prélever la dispersion, puis retournent à la fourmilière.

Après 15 jours, on n'observe plus aucune activité de surface autour de la fourmilière. Celle-ci est alors mise à jour par excavation.

On observe un taux de destruction supérieur à 99%.

Notamment toutes les larves ont été détruites.

## Revendications

1. Procédé de contrôle d'une population de fourmis ou de guêpes, **caractérisé en ce que** l'on applique à une fraction mineure de cette population une quantité efficace d'une composition comprenant un appât et un composé de 5-amino-3-cyano-1-[2,6-dichloro-4-(trifluoromethyl)phenyl]-4-[(trifluoromethyl)sulfinyl]-1*H*-pyrazole, et **caractérisé en ce que** la quantité efficace de composition mise en oeuvre est égale à la dose nécessaire à la destruction d'au moins 90 % de la fraction mineure de la population d'insectes sociaux à laquelle est appliquée ladite composition, en un temps compris entre 2 et 30 jours, et la composition est appliquée à une fraction de la population comprise entre 1 et 40 % de la population totale.

2. Procédé selon la revendication 1, **caractérisé en ce que** la population d'insectes sociaux contrôlée est une population de fourmi.

3. Procédé de lutte contre les fourmis ou les guêpes, ayant un nid ou lieu d'habitation en commun où ils vivent avec une population substantielle de leurs congénères, le dit procédé comprenant un traitement par une dose efficace d'une composition selon la revendication 1, de préférence une dose comprise entre 0,0001 et 20 grammes par 100 m² d'une ou plusieurs zones fréquentées ou supposées fréquentées par les dites fourmis ou guêpes, la dite zone étant située hors du dit lieu de la dite habitation en commun mais étant un lieu où les fourmis ou les guêpes circulent ou sont supposés circuler.

4. Procédé selon l'une des revendications précédentes, **caractérisé en ce que** la quantité efficace de composition mise en oeuvre est une quantité susceptible de contrôler l'ensemble de la population d'insectes sociaux.

5. Procédé selon l'une des revendications précédentes, **caractérisé en ce que** la quantité efficace de composition mise en oeuvre est égale à la dose nécessaire à la destruction d'au moins 90 % de la fraction mineure de la population d'insectes sociaux à laquelle est appliquée ladite composition, en un temps compris entre 2 et 7 jours.

6. Procédé selon l'une des revendications précédentes, **caractérisé en ce que** la quantité efficace de composition mise en oeuvre pour le procédé selon l'invention est telle que la dose de composé est comprise entre 0,05 et 50 mg par fourmilière traitée.

7. Procédé selon l'une des revendications précédentes, **caractérisé en ce que** la quantité efficace de composition mise en oeuvre pour le procédé selon l'invention est telle que la dose de composé est comprise entre 0,0001 et 20 g par 100 m².

8. Procédé selon l'une des revendications précédentes, **caractérisé en ce que** l'appât mis en oeuvre est choisi parmi des protéines animales et/ou végétales, ou bien des matières grasses également animales et/ou végétales ou encore parmi les mono, oligo ou polyorganosaccharides, spécialement parmi le saccharose, le lactose, le fructose, le dextrose, le glucose ou encore la mélasse ou le miel.

9. Procédé selon l'une des revendications précédentes, **caractérisé en ce que** la composition est appliquée à une fraction de la population comprise entre 2 et 20 % de la population totale.

10. Procédé selon l'une des revendications précédentes, **caractérisé en ce que** la population de fourmis contrôlée est une population de fourmis vivant dans une même fourmilière.

11. Procédé selon la revendication 1, **caractérisé en ce que** la fraction mineure de la population à laquelle la composition est appliquée est constituée par des ouvrières récolteuses de la fourmilière.

12. Procédé selon l'une des revendications précédentes, **caractérisé en ce que** la dose de composé dans la composition est comprise entre 0,0005 et 0,5 %,

13. Procédé selon l'une des revendications précédentes, **caractérisé en ce que** la dose d'appât dans la composition est comprise entre 1 et 99 %,

14. Procédé selon l'une des revendications précédentes, **caractérisé en ce que** l'on applique la composition en plaçant celle-ci dans une boîte porte appât close et comportant des ouvertures réservées, en raison de leur taille, à l'usage exclusif des fourmis, dans une zone où celles-ci sont susceptibles de se trouver.

15. Procédé selon la revendication 14, **caractérisé en ce que** la zone se trouve dans un local public ou privé, tel qu'un local d'habitation, ou encore sur un balcon, une terrasse, ou dans un jardin ou dans un champ.

## Patentansprüche

1. Verfahren zur Bekämpfung einer Ameisen- oder Wespenpopulation, **dadurch gekennzeichnet, daß** man auf eine kleine Fraktion dieser Population eine wirksame Menge einer Zusammensetzung, enthaltend einen Köder und eine 5-Amino-3-cyano-1-[2,6-dichlor-4-trifluormethyl)phenyl]-4-[(trifluormethyl)sulfinyl]-1*H*-pyrazol-Verbindung, appliziert und die verwendete wirksame Menge der Zusammensetzung gleich der zur Vernichtung von mindestens 90% der kleinen Fraktion der Population von sozialen Insekten, auf die die Zusammensetzung appliziert wird, in einem Zeitraum zwischen 2 und 30 Tagen erforderlichen Dosis ist und die Zusammensetzung auf eine Populationsfraktion zwischen 1 und 40% der Gesamtpopulation appliziert wird.

2. Verfahren nach Anspruch 1, **dadurch gekennzeichnet, daß** es sich bei der bekämpften Population von sozialen Insekten um eine Ameisenpopulation handelt.

3. Verfahren zur Bekämpfung von Ameisen oder Wespen mit einem Nest oder gemeinsamen Habitationsort, in dem sie mit einer beträchtlichen Population ihrer Artgenossen leben, bei dem man einen oder mehrere von den Ameisen oder Wespen häufig besuchte oder vermutlich häufig besuchte Bereiche mit einer wirksamen Dosis einer Zusammensetzung nach Anspruch 1, vorzugsweise einer Dosis zwischen 0,0001 und 20 Gramm pro 100 m², behandelt, wobei sich der Bereich außerhalb des gemeinsamen Habitationsortes befindet und es sich dabei um einen Ort handelt, an dem sich die Ameisen oder Wespen bewegen oder vermutlich bewegen.

4. Verfahren nach einem der vorhergehenden Ansprüche, **dadurch gekennzeichnet, daß** es sich bei der verwendeten wirksamen Menge der Zusammensetzung um eine Menge handelt, mit der man die gesamte Population von sozialen Insekten bekämpfen kann.

5. Verfahren nach einem der vorhergehenden Ansprüche, **dadurch gekennzeichnet, daß** die verwendete wirksame Menge der Zusammensetzung gleich der zur Vernichtung von mindestens 90% der kleinen Fraktion der Population von sozialen Insekten, auf die die Zusammensetzung appliziert wird, in einem Zeitraum zwischen 2 und 7 Tagen erforderlichen Dosis ist.

6. Verfahren nach einem der vorhergehenden Ansprüche, **dadurch gekennzeichnet, daß** die für das erfindungsgemäße Verfahren verwendete wirksame Menge der Zusammensetzung so bemessen wird, daß die Dosis der Verbindung zwischen 0,05 und 50 mg pro behandeltem Ameisenhaufen liegt.

7. Verfahren nach einem der vorhergehenden Ansprüche, **dadurch gekennzeichnet, daß** die für das erfindungsgemäße Verfahren verwendete wirksame Menge der Zusammensetzung so bemessen wird, daß die Dosis der Verbindung zwischen 0,0001 und 20 g pro 100 m² liegt.

8. Verfahren nach einem der vorhergehenden Ansprüche, **dadurch gekennzeichnet, daß** der verwendete Köder unter tierischen und/oder pflanzlichen Proteinen, Fetten ebenfalls tierischer und/oder pflanzlicher Herkunft oder Mono-, Oligo- oder Polyorganosacchariden, insbesondere unter Saccharose, Lactose, Fructose, Dextrose, Glucose, Melasse oder Honig, ausgewählt wird.

9. Verfahren nach einem der vorhergehenden Ansprüche, **dadurch gekennzeichnet, daß** man die Zusammensetzung auf eine Populationsfraktion zwischen 2 und 20% der Gesamtpopulation appliziert.

10. Verfahren nach einem der vorhergehenden Ansprüche, **dadurch gekennzeichnet, daß** es sich bei der bekämpften Ameisenpopulation um eine in demselben Ameisenhaufen lebende Ameisenpopulation handelt.

11. Verfahren nach einem der vorhergehenden Ansprüche, **dadurch gekennzeichnet, daß** die kleine Fraktion der Population, auf die die Zusammensetzung appliziert wird, aus Sammlerarbeiterinnen des Ameisenhaufens besteht.

12. Verfahren nach einem der vorhergehenden Ansprüche, **dadurch gekennzeichnet, daß** die Dosis der Verbindung in der Zusammensetzung zwischen 0,0005 und 0,5% liegt.

13. Verfahren nach einem der vorhergehenden Ansprüche, **dadurch gekennzeichnet, daß** die Dosis des Köders in der Zusammensetzung zwischen 1 und 99% liegt.

14. Verfahren nach einem der vorhergehenden Ansprüche, **dadurch gekennzeichnet, daß** man die Zusammensetzung appliziert, indem man sie in einem Bereich, in dem sie vermutlich zu finden sind, in einem geschlossenen Köderkasten mit Öffnungen, die aufgrund ihrer Größe für die ausschließliche Nutzung durch Ameisen reserviert sind, plaziert.

15. Verfahren nach Anspruch 14, **dadurch gekennzeichnet, daß** der Bereich sich in einem öffentlichen oder privaten Raum, wie einem Wohnraum, oder auf einem Balkon oder einer Terrasse oder in einem Garten oder einem Feld befindet.

## Claims

1. Method for controlling a population of ants or wasps, **characterized in that** an effective amount of a composition comprising a bait and a compound of 5-amino-3-cyano-1-[2,6-dichloro-4-(trifluoromethyl)phenyl]-4-[(trifluoromethyl)-sulphinyl]-1H-pyrazole is applied to a minor fraction of this population, and **characterized in that** the effective amount of composition used is equal to the dose required to destroy at least 90% of the minor fraction of the population of social insects to which said composition is applied, in a time between 2 and 30 days, and the composition is applied to a fraction of the population which is between 1 and 40% of the total population.

2. Method according to Claim 1, **characterized in that** the controlled population of social insects is a population of ants.

3. Method for controlling ants or wasps which have a common dwelling place or nest in which they live with a substantial population of their congeners, said method comprising a treatment with an effective dose of a composition according to Claim 1, preferably a dose of between 0.0001 and 20 grams per 100 m², of one or more areas frequented by, or assumed to be frequented by, said ants or wasps, said area being outside said place of said common dwelling but being a place in which the ants or wasps circulate or are assumed to circulate.

4. Method according to one of the preceding claims, **characterized in that** the effective amount of composition used is an amount which is capable of controlling the whole population of social insects.

5. Method according to one of the preceding claims, **characterized in that** the effective amount of composition used is equal to the dose required to destroy at least 90% of the minor fraction of the population of social insects to which said composition is applied, in a time between 2 and 7 days.

6. Method according to one of the preceding claims, **characterized in that** the effective amount of composition used for the method according to the invention is such that the dose of compound is between 0.05 and 50 mg per anthill treated.

7. Method according to one of the preceding claims, **characterized in that** the effective amount of composition used for the method according to the invention is such that the dose of compound is between 0.0001 and 20 g per 100 m².

8. Method according to one of the preceding claims, **characterized in that** the bait employed is chosen from animal and/or plant proteins, or alternatively from fats, also of animal and/or plant origin, or even from mono-, oligo- or polyorganosaccharides, especially from sucrose, lactose, fructose, dextrose, glucose or even molasses or honey.

9. Method according to one of the preceding claims, **characterized in that** the composition is applied to a fraction of the population which is between 2 and 20% of the total population.

10. Method according to one of the preceding claims, **characterized in that** the controlled population of ants is a population of ants living in the same anthill.

11. Method according to Claim 1, **characterized in that** the minor fraction of the population to which the composition is applied consists of harvester workers from the anthill.

12. Method according to one of the preceding claims, **characterized in that** the dose of compound in the composition is between 0.0005 and 0.5%.

13. Method according to one of the preceding claims, **characterized in that** the dose of bait in the composition is between 1 and 99%.

14. Method according to one of the preceding claims, **characterized in that** the composition is applied by placing it in a closed bait-carrier box containing openings which are reserved, on account of their size, for the exclusive use of ants, in an area where they are likely to be found.

15. Method according to Claim 14, **characterized in that** the area is in a public or private place, such as a living area, or alternatively on a balcony, a patio, in a garden or in a field.
